# EUROPÄISCHE PATENTSCHRIFT

(11) **EP 1 789 305 B1**
(45) Veröffentlichungstag und Bekanntmachung des Hinweises auf die Patenterteilung: **23.06.2010**
(21) Anmeldenummer: 05782616.6
(22) Anmeldetag: 16.09.2005
(51) Int. Cl.: B62D 5/04, B62D 7/09, B62D 3/02, B62D 1/20

(54) **FAHRZEUGLENKUNG**
AUTOMOTIVE STEERING SYSTEM
SYSTEME DE DIRECTION AUTOMOBILE

(30) Priorität: 17.09.2004 EP 04405596
(43) Veröffentlichungstag der Anmeldung: 30.05.2007
(73) Patentinhaber: Cygnus AG, 3600 Thun (CH)
(72) Erfinder: BÜTSCHI, Thomas, CH-3647 Reutigen (CH); ZELLWEGER, Lorenz, CH-3600 Thun (CH)
(74) Vertreter: Rüfenacht, Philipp Michael
(86) Internationale Anmeldenummer: PCT/CH2005/000548
(87) Internationale Veröffentlichungsnummer: WO 2006/029547

(56) Entgegenhaltungen:
- EP-A- 0 915 003
- DE-A1- 10 003 936
- DE-A1- 10 216 130
- DE-A1- 19 601 826
- DE-A1- 19 750 585
- US-A- 4 735 274
- US-A- 5 143 400
- US-A1- 2003 234 136
- PATENT ABSTRACTS OF JAPAN Bd. 007, Nr. 124 (M-218), 28. Mai 1983 (1983-05-28) & JP 58 039566 A (TOYO KOGYO KK), 8. März 1983 (1983-03-08)

## Beschreibung

### Technisches Gebiet

Die vorliegende Erfindung betrifft eine Fahrzeuglenkung mit variablem Übersetzungsverhältnis für ein mit wenigstens einem lenkbaren Rad versehenes Fahrzeug, mit einem Lenkgestänge, das wenigstens eine Steuerstange und eine Arbeitsstange aufweist, sowie einem mit einem Stellantrieb versehenen Überlagerungsgetriebe, das zwischen der Steuerstange und der Arbeitsstange wirkt, wobei die Steuerstange unter Einfluss einer Lenkspindel und eines Lenkgetriebes in Steuerstangenlängsrichtung verschiebbar ist, die Arbeitsstange unter Einfluss der Verschiebebewegung der Steuerstange und einer dieser Verschiebebewegung mittels des Überlagerungsgetriebes überlagerten, von dessen Stellantrieb initiierten Relativverschiebebewegung zwischen der Steuerstange und der Arbeitsstange in Arbeitsstangenlängsrichtung verschiebbar ist, und wobei die Verschiebebewegung der Arbeitsstange über eine Partie des Lenkgestänges an das lenkbare Rad übertragen wird, um dieses zu lenken, wobei das Überlagerungsgetriebe eine Spindel und eine mit dieser nach Art eines Spindel-Mutter-Triebes zusammenwirkende Mutter umfasst.

### Stand der Technik

Bei konventionellen Fahrzeuglenkungen werden die vom Fahrer an einer Lenkhandhabe (z. B. einem Lenkrad oder einer Lenkstange) initiierten Lenkbewegungen über eine Lenkspindel, ein Lenkgetriebe und ein Lenkgestänge an die lenkbaren Fahrzeugräder weitergeleitet. Dabei wird durch die Fahrzeuglenkung insgesamt eine Drehbewegung der Lenkhandhabe um einen Drehwinkel dα in eine Schwenkbewegung der gelenkten Räder um einen Schwenkwinkel dβ umgesetzt. Das Übersetzungsverhältnis der Lenkung (d. h. das Übersetzungsverhältnis zwischen der Drehbewegung des Lenkrades und der Schwenkbewegung der gelenkten Räder) wird im Falle von konventionellen Fahrzeuglenkungen üblicherweise als konstant angesehen, obwohl genau genommen auch hier bereits bei grossen Schwenkwinkeln eine geringfügige Änderung des Übersetzungsverhältnisses eintritt, die durch die Geometrie des Lenkgestänges bedingt ist. Trotz dieser geringfügigen Nicht-Linearitäten wird im Falle von konventionellen Fahrzeuglenkungen von einer linearen Beziehung zwischen dem Drehwinkel dα der Lenkhandhabe und dem Schwenkwinkel dβ der gelenkten Räder gesprochen.

Daneben sind sogenannte Fahrzeuglenkungen mit einem variablen Übersetzungsverhältnis bekannt, bei denen zur Verbesserung der Manövrierfähigkeit bei kleinen Fahrgeschwindigkeiten und/oder der Geradeauslaufeigenschaften bei hohen Fahrgeschwindigkeiten ein gezielt variables Übersetzungsverhältnis zwischen dem Drehwinkel dα der Lenkhandhabe und dem Schwenkwinkel dβ der gelenkten Räder verwirklicht ist.

In der EP 0 915 003 A1 (Wandfluh AG) ist eine Fahrzeuglenkung mit variablem Übersetzungsverhältnis beschrieben, die mit einem mechanischen Lenkgetriebe versehen ist, das eine hochgradige Nichtlinearität zwischen den Bewegungen am Getriebeeingang und den Bewegungen am Getriebeausgang aufweist. Bei dieser Lenkung ist zwar aufgrund des speziellen Lenkgetriebes ein variables Übersetzungsverhältnis mit einer vergleichsweise grossen Differenz zwischen dem maximalen und dem minimalen Übersetzungsverhältnis verwirklicht. Da aber - analog zu konventionellen Lenkungen mit konstantem Übersetzungsverhältnis - nach wie vor eine Zwangskopplung zwischen der Lenkhandhabe und den gelenkten Rädern besteht, sind die Variationsmöglichkeiten zur Beeinflussung des Übersetzungsverhältnisses beschränkt.

Grössere Variationsmöglichkeiten zur Beeinflussung des Übersetzungsverhältnisses gewähren Lenkungen des Typs, bei dem den durch den Fahrer initiierten Lenkbewegungen weitere Lenkbewegungen überlagert werden, die von einem mit einem Stellantrieb versehenen Überlagerungsgetriebe initiiert werden. Dabei wird jeweils der durch den Fahrer initiierten Lenkbewegung einer Lenkungskomponente mittels des Überlagerungsgetriebes eine weitere Lenkbewegung überlagert, die nicht direkt durch den Fahrer initiiert ist.

In den Druckschriften DE 197 50 585 A1 (Deutsches Zentrum für Luft- und Raumfahrt) und DE 196 01 826 A1 (Bosch) sind Lenkungen dieses Typs mit einem Überlagerungsgetriebe beschrieben, wobei jeweils einer durch den Fahrer initiierten Drehbewegung einer Achse oder Welle der Lenkung mittels des elektromotorisch angetriebenen Stellantriebs des Überlagerungsgetriebes eine weitere Drehbewegung überlagert wird. Dabei kann das Überlagerungsgetriebe zwischen der Lenkhandhabe und dem Lenkgetriebe, im Bereich des Lenkgetriebes oder zwischen dem Lenkgetriebe und den gelenkten Rädern angeordnet sein.

Die zur Überlagerung von zwei Drehbewegungen ausgebildeten Überlagerungsgetriebe verursachen erhebliche Reibungsverluste und vermitteln dem Fahrer ein ungewohntes Lenkungsgefühl. Deshalb wird in der Druckschrift DE 102 16 130 A1 (BMW) eine Fahrzeuglenkung nach dem Oberbegriff des Anspruchs 1 vorgeschlagen, welche auf beiden Seiten des Lenkgetriebes einer Zahnstangen-Lenkung jeweils zwischen dem Lenkgetriebe und den beiden gelenkten Rädern je ein Überlagerungsgetriebe aufweist. Die beiden Überlagerungsgetriebe koppeln die Zahnstange im Bereich ihrer beiden Längsenden je mit einer koaxial zur Zahnstange angeordneten Spurstange, wobei jedes der beiden Überlagerungsgetriebe der durch die Lenkspindel und das Zahnstangegetriebe verursachten Zahnstangen-Schiebebewegung in Stangenlängsrichtung je eine weitere Schiebebewegung in Stangenlängsrichtung überlagert. Die Überlagerungsgetriebe umfassen an der Zahnstange ausgebildete Innenspindeln, mit dieser zusammenwirkende, über ein Axialgelenk mit der Spurstange verbundene Steuerhülsen sowie drehbare Gehäuseteile. Letztere weisen jeweils eine Kurvenbahn auf, mit welcher ein an der Steuerhülse ausgebildeter Stift zusammenwirkt, so dass durch ein Verdrehen der Gehäuseteile relativ zu den Steuerhülsen die Abstände zwischen Zahn- und Steuerstange beeinflusst werden können. Die Drehbewegungen werden durch Aktuatoren bewirkt, welche an aussenseitig an den Gehäusen angebrachten Hebeln angreifen. Die in der Druckschrift DE 102 16 130 A1 (BMW) beschriebenen Überlagerungsgetriebe zur Überlagerung von zwei Schiebebewegungen vermitteln dem Fahrer zwar ein besseres Lenkungsgefühl als die Überlagerungsgetriebe zur Überlagerung von Drehbewegungen. Sie sind aber konstruktiv aufwändig und problematisch hinsichtlich des Bauraum-Bedarfs im Bereich der Zahnstange.

Noch grössere Variationsmöglichkeiten zur Beeinflussung des Übersetzungsverhältnisses gewähren Lenkungen, die nach dem sogenannten "steering-by-wire" Prinzip funktionieren. Bei diesen Lenkungen wird von einem Mikroprozessor aus einer Vielzahl von relevanten Parametern ein Schwenkwinkel berechnet, welcher dann von geeigneten Stellgliedern an die gelenkten Räder übertragen wird. In der Druckschrift DE 195 46 94 C1 (Mercedes-Benz) wird eine Fahrzeuglenkung mit einem Übersetzungsverhältnis beschrieben, welches entsprechend einem Kennfeld zumindest in Abhängigkeit eines Drehwinkels dα der Lenkhandhabe und der Fahrgeschwindigkeit veränderbar ist.

### Darstellung der Erfindung

Aufgabe der Erfindung ist es, für eine dem eingangs genannten technischen Gebiet zugehörende Fahrzeuglenkung mit variablem Übersetzungsverhältnis ein neues Konzept aufzuzeigen.

Die Lösung der Aufgabe ist durch die Merkmale des unabhängigen Anspruchs definiert. Gemäss der Erfindung ist ein erster Getriebeteil (Basisteil) eines aus der Spindel (Gewindespindel) und der Mutter gebildeten Getriebeteilepaares fest mit einer ersten Stange eines aus der Steuerstange und der Arbeitsstange gebildeten Stangenpaares verbunden, d. h. der erste Getriebeteil ist drehfest und unverschiebbar bezüglich der ersten Stange. Insbesondere kann die Spindel sogar als integraler Bestandteil der ersten Stange ausgebildet sein. Der zweite Getriebeteil des Getriebeteilepaares ist bezüglich der zweiten Stange des Stangenpaares drehbar an der zweiten Stange gelagert, d. h. der zweite Getriebeteil ist um eine zur Stangenlängsrichtung der zweiten Stange parallele Drehachse drehbar, in Stangenlängsrichtung der zweiten Stange aber im Wesentlichen unverschiebbar. Der Stellantrieb ist schliesslich so ausgebildet und angeordnet, dass er den zweiten Getriebeteil zur Drehung bezüglich der zweiten Stange antreiben kann. Durch eine relative Drehbewegung zwischen Mutter und Spindel werden die beiden Getriebeteile in Spindellängsrichtung relativ zueinander verschoben. Mittels des Stellantriebs kann so eine geradlinige Relativverschiebbewegung des ersten Getriebeteils (Basisteil) und damit der ersten Stange in Längsrichtung der zweiten Stange erzeugt werden.

Dadurch, dass mittels des Stellantriebs direkt der zweite Getriebeteil um seine Drehachse angetrieben werden kann, kann das Überlagerungsgetriebe kompakt und mit einer einfachen Mechanik ausgeführt werden. Das Getriebe ist somit konstruktiv einfach und damit kostengünstig und wenig fehleranfällig.

Der Spindel-Mutter-Trieb des Stellantriebs ist mit Vorteil als selbsthemmender Kugelumlauf ausgebildet, d. h. die Mutter ist ein Kugelumlauflager, und die Spindel eine Kugelumlaufspindel. Zum Antreiben des zweiten Getriebeteils wird mit Vorteil ein Elektromotor eingesetzt. Alternativ kann beispielsweise auch ein hydraulischer Antrieb zum Einsatz gelangen.

Die Steuerstange kann z. B. eine mit einem Lenkgetriebe der Fahrzeuglenkung verbundene Stange sein, insbesondere die Zahnstange eines Zahnstangen-Lenkgetriebes oder eine mit dieser fest verbundene Stange. Die Arbeitsstange kann z. B. eine Spurstange sein oder eine mit dieser fest verbundene Stange.

Das Überlagerungsgetriebe ist vorzugsweise derart ausgebildet und angeordnet, dass im Falle eines Ausfalls des Stellantriebs dieser blockiert ist und dann die Steuerstange über das Überlagerungsgetriebe unverschiebbar mit der Arbeitsstange verbunden ist. Dadurch wird die Sicherheit der erfindungsgemässen Fahrzeuglenkung im Störungsfall verbessert.

Gemäss einer vorteilhaften Variante der erfindungsgemässen Fahrzeuglenkung ist der erste Getriebeteil des Getriebeteilepaares die Mutter, und die erste Stange des Stangenpaares ist die Steuerstange. Die Mutter ist also fest an der Steuerstange angebracht, während die mit der Mutter zusammenwirkende Spindel drehbar an der Steuerstange angeordnet und mittels des Stellantriebs zur Drehung um ihre Drehachse herum antreibbar ist. Diese Anordnung ist konstruktiv einfach und platzsparend; die Mutter lässt sich zudem als integraler Bestandteil der Steuerstange ausbilden, z. B. indem an Letzterer eine stirnseitige axiale Bohrung zur Aufnahme der Spindel ausgebildet wird.

Bei einer alternativen Ausführung kann die Mutter an der Arbeitsstange angebracht sein, während die Spindel mit der Steuerstange verbunden ist. Es sind auch weitere Ausführungen realisierbar, wobei jeweils einer der Getriebeteile bezüglich der zugeordneten Stange drehbar (aber axial unverschiebbar) ist, während der andere mit seiner zugeordneten Stange fest (d. h. drehfest und axial unverschiebbar) verbunden ist. Der Antrieb wirkt jeweils mit dem drehbaren Getriebeteil zusammen. Es ist also insbesondere auch denkbar, die Mutter drehbar mit der zugeordneten Stange zu koppeln, während die Spindel drehfest mit der anderen Stange verbunden ist.

Bei einer vorteilhaften Variante einer erfindungsgemässen Fahrzeuglenkung bildet die Steuerstange die Zahnstange eines Lenkgetriebes, wie es für konventionelle Zahnstangenlenkungen gebräuchlich ist. Der erste Getriebeteil kann dann fest mit der Zahnstange verbunden sein. Insbesondere kann der erste Getriebeteil durch eine Mutter gebildet sein, welche als integraler Bestandteil der Zahnstange ausgebildet ist. Dadurch wird insgesamt eine besonders einfache, kompakte und kostengünstige Konstruktion der Fahrzeuglenkung erreicht.

Die Zahnstange des Lenkgetriebes kann eine regelmässige Zahnung aufweisen, um ein Lenkgetriebe mit einem konstanten Übersetzungsverhältnis zu bilden. Als Alternative dazu kann aber auch eine Zahnstange verwendet werden, deren Verzahnung mit unterschiedlichem Modul und Eingriffswinkel gefertigt ist, um ein Lenkgetriebe mit einem variablen Übersetzungsverhältnis zu bilden.

Bei einer vorteilhaften Ausführungsform der erfindungsgemässen Lenkung weist die Arbeitsstange einen Hohlraum auf, in welchem die Steuerstange angeordnet ist. Die Achsen der Arbeits- und der Steuerstange können zusammenfallen oder parallel, aber leicht zueinander versetzt sein. Dadurch kann der Platzbedarf des Überlagerungsgetriebes und der Lenkung insgesamt minimiert werden.

Mit Vorteil weist der Mantel der Arbeitsstange eine durchgehende Öffnung auf, durch welche hindurch das Lenkgetriebe mit der in der Arbeitsstange aufgenommenen Steuerstange zusammenwirken kann. Dadurch wird auf eine konstruktiv einfache Weise das Zusammenwirken mit einem konventionellen Lenkgetriebe ermöglicht.

Vorzugsweise ist der Stellantrieb direkt im Hohlraum der Arbeitsstange angeordnet. Der notwendige zusätzliche Einbauraum für das Überlagerungsgetriebe ist somit derart gering, dass die erfindungsgemässe Lenkung in den meisten Fahrzeugmodellen ohne Anpassungen einbau- oder nachrüstbar ist. Durch die integrierte Lösung wird zudem der Einbau vereinfacht: Es kann beispielsweise (in mechanischer Sicht) ausreichend sein, die vorhandene Spurstange durch die erfindungsgemässe Antriebsstange mit integriertem Stellantriebe zu ersetzen. Das Betriebsgeräusch des Stellantriebs wird durch die Anordnung innerhalb der Arbeitsstange stark gedämpft, so dass es auch bei sehr leisen Fahrzeugmotoren und ohne zusätzliche Schalldämmungsmassnahmen im Fahrzeuginnenraum nicht oder kaum hörbar ist.

Ein innerhalb der Arbeitsstange eingebauter Stellantrieb umfasst mit Vorteil einen hochpoligen Wechselstrom-Elektromotor. Ein hochpoliger Wechselstrom-Elektromotor umfasst 8 Polpaare (d. h. 16 Pole) oder mehr, ermöglicht somit ohne den Einsatz eines zusätzlichen Getriebes niedrige Drehzahlen bei hohem Drehmoment und weist einen hohen Wirkungsgrad auf. Geeignete derartige Motoren, welche einen geringen Einbauraum benötigen und auch sonst den Anforderungen genügen und somit bevorzugt im Rahmen der Erfindung eingesetzt werden, sind aus der DE 102 40 704 A1 (Tirron Elektronik GmbH) bekannt. Es handelt sich dabei um hochpolige Wechselstrommaschinen mit einem Stator und einem mit Dauermagneten bestückten Rotor. Pro Phase ist ein Ferritkern vorgesehen, welcher aus zwei Ferritkernschalen besteht und welcher einen zentralen Spulenkörper mit einer oder mehreren Wicklungen enthält. Die Achse des Spulenkörpers fällt mit der Wellenachse einer Rotorwelle des Rotors zusammen. Ausserhalb des Spulenkörpers sind durch Ausschleifen eine Anzahl von Ferritpolen gebildet. Der vom Stator durch einen Luftspalt getrennte Rotor umfasst eine doppelt hohe Anzahl von Dauermagneten sowie die Rotorwelle, eine Rotorscheibe, eine Rotorhülse und einen Dauermagnethaltering für die Dauermagnete. Die Dauermagnete weisen in axialer Richtung jeweils eine abwechselnde Nord- und Südpolarisierung auf. Dieselbe Anordnung ist für mehrere Phasen mit einer gemeinsamen Rotorwelle axial nebeneinander aufgebaut. Die Ferritpole der einzelnen Phasen sind gegenüber den Dauermagnetpolen tangential um eine Polteilung dividiert durch die Anzahl Phasen verschoben, so dass sich mit der Phasenlage des Stromes zusammen eine bestimmte Drehrichtung ergibt. Ein für Personenwagen geeigneter derartiger Motor lässt sich beispielsweise mit einem Aussendurchmesser von nur 22 mm fertigen.

Um von den Rädern auf die Arbeitsstange einwirkende Vibrationen zu dämpfen, ist in der Arbeitsstange mit Vorteil eine Motoraufnahme angeordnet, in oder an welcher der Stellantrieb befestigt werden kann, wobei die Motoraufnahme elastisch ausgebildet ist. Dies kann durch die Fertigung der Motoraufnahme aus einem elastischen Material bzw. mit Abschnitten aus einem elastischen Material oder durch Versehen der Motoraufnahme mit Federmitteln erreicht werden.

Momente und Vibrationen werden vom lenkbaren bzw. gelenkten Fahrzeugrad auf die Arbeitsstange übertragen. Durch die elastische Motoraufnahme wird die weitere Übertragung auf die Steuerstange vermindert. Durch die Auswahl der Federmittel kann somit gezielt die Rückwirkung des Rades auf die Lenkhandhabe und somit die Auslegung der Lenkung (sportlich-hart oder komfortabel-gedämpft) beeinflusst werden.

Der Drehantrieb kann auch einen vom zweiten Getriebeteil distanzierten Antriebsmotor und ein Drehantriebsgetriebe umfassen, wobei der Antriebsmotor über das Drehantriebsgetriebe mit dem zweiten Getriebeteil gekoppelt ist, um diesen zur Drehung bezüglich der zweiten Stange anzutreiben. Der Antriebsmotor kann am ersten Getriebeteil (Basisteil) angebracht sein oder an irgendeiner anderen Partie der Fahrzeuglenkung oder des Fahrzeugs. Das Drehantriebsgetriebe kann z. B. einen Zahnriemen umfassen, welcher vom Antriebsmotor angetrieben wird und die Mutter zur Drehung um ihre Drehachse herum antreibt. Als Alternative zu einem Zahnriemenantrieb kann das Drehantriebsgetriebe aber auch ein Zahnradgetriebe, ein Kettengetriebe oder irgend ein anderes Antriebsgetriebe umfassen, das geeignet ist, den zweiten Getriebeteil des Spindel-Mutter-Triebs zur Drehung um seine Drehachse herum anzutreiben. Der distanzierte Antriebsmotor ist geringeren Anforderungen an die Baugrösse unterworfen, lässt sich problemlos mit Energie versorgen und ist einfacher kühlbar. Allerdings wird für den distanzierten Motor und die Übertragung zum zweiten Getriebeteil zusätzlicher Bauraum benötigt und der Einbau der Lenkung kann (besonders bei Umrüstungen) etwas aufwändiger sein als bei integrierten Lösungen.

Bei einer Ausführungsform der Erfindung ist die Arbeitsstange in einem Abstand quer zur Steuerstangenlängsrichtung von der Steuerstange (respektive quer zur Steuerstange oder deren Verlängerung) versetzt angeordnet, insbesondere sind die Arbeits- und die Steuerstange versetzt zueinander nebeneinander angeordnet. Dadurch wird im Bereich der Steuerstange weniger Bauraum benötigt. Dieser Bauraum kann dann für andere Komponenten der Fahrzeuglenkung und/oder des Fahrzeugs verwendet werden. Im Vergleich zu Konstruktionen, bei denen die Steuerstange und die Arbeitsstange unmittelbar beieinander oder sogar koaxial zueinander benachbart angeordnet werden, gewährt diese Lösung andere Freiheiten bei der Realisierung von verschiedenen konstruktiven Lösungen im Bereich der Steuerstange. Darüber hinaus wird durch die quer zueinander versetzte Anordnung eine wenigstens teilweise Entkopplung der Steuerstange von der Arbeitsstange erreicht. Es werden dann nicht mehr sämtliche Momente und Vibrationen, die vom lenkbaren bzw. gelenkten Fahrzeugrad auf die Arbeitsstange übertragen werden, von dieser weiter auf die Steuerstange übertragen. Dies eröffnet die Möglichkeit, die Steuerstange weniger massiv zu konstruieren als im Falle einer unmittelbar bei der Steuerstange angeordneten und direkt mit dieser gekoppelten Arbeitsstange.

Vorteilhafterweise sind bei dieser Ausführung der erfindungsgemässen Lenkung die Steuerstange und die Arbeitsstange parallel zueinander (und zueinander quer zu ihrer Längsrichtung versetzt) angeordnet. Dadurch wird die Konstruktion der erfindungsgemässen Fahrzeuglenkung vereinfacht. Grundsätzlich ist es aber auch möglich, die Steuerstange und die Arbeitsstange nicht parallel zueinander anzuordnen.

Bevorzugt sind das Überlagerungsgetriebe und das Lenkgestänge derart ausgebildet, dass durch eine Drehstellung der Lenkspindel vorgegebene Lenkwinkel durch Betätigen des Stellantriebs für zwei lenkbare Räder auf dieselbe Weise wie bei einer Veränderung der Drehstellung beeinflusst werden. Mit einem einzigen Überlagerungsgetriebe kann somit die Lenk-Übersetzung für beide Räder beeinflusst werden (wobei die Beeinflussung beider Radstellungen stets dieselbe ist wie bei einer entsprechenden Änderung der Drehstellung des Lenkrads). Bei einer derartigen Ausführungsform ist es also nicht beabsichtigt, den Lenkwinkel des inneren Rades unabhängig vom Lenkwinkel des äusseren Rades beeinflussen zu können, vielmehr soll die Beeinflussung der Lenkwinkel stets einer Änderung der Lenk-Übersetzung entsprechen. Dadurch ergibt sich ein Lenkverhalten, welches schnell erlernbar und gut kontrollierbar ist. Es sind zudem keine aufwändigen Anpassungen an weiteren Komponenten, wie z. B. einer Servolenkung, notwendig.

Um diese Charakteristik der Lenkung zu realisieren, hat vorzugsweise das Überlagerungsgetriebe ein einziges Abtriebsglied, welches ausschliesslich über Schwenkgelenke und starre Verbindungsglieder (also z. B. über Spurstangen und Lenkhebel) mit beiden Rädern verbunden ist.

Diese Verbindung kann besonders einfach realisiert werden, wenn das Abtriebsglied eine Arbeitsstange (Spurstange) umfasst, welche durchgehend von einem ersten Lenkhebel des ersten Rades zu einem zweiten Lenkhebel des zweiten Rades ausgebildet ist.

Gemäss einem weiteren vorteilhaften Aspekt der Erfindung hat eine Fahrzeuglenkung für ein mit wenigstens einem lenkbaren Rad versehenes Fahrzeug eine von einem Fahrer betätigbare Lenkhandhabe, z. B. ein Lenkrad oder eine Lenkstange, welche mit dem lenkbaren Rad gekoppelt ist, um dieses zu lenken. Dabei liegt zwischen einem an der Lenkhandhabe vom Fahrer ausgeübten Drehwinkel und einem dadurch über die Fahrzeuglenkung bewirkten Schwenkwinkel des lenkbaren Rads ein Übersetzungsverhältnis vor, welches durch eine Steuerungsvorrichtung entsprechend einem Kennfeld zumindest in Abhängigkeit von der Auslenkung der Lenkhandhabe aus einer Geradeausstellung der Lenkhandhabe und in Abhängigkeit von der Fahrgeschwindigkeit des Fahrzeugs veränderbar ist. Das Übersetzungsverhältnis bleibt jedoch im Wesentlichen konstant, wenn sowohl die Fahrgeschwindigkeit in einem mittleren Geschwindigkeitsbereich als auch die Auslenkung der Lenkhandhabe aus ihrer Geradeausstellung in einem begrenzten Bereich um die Geradeausstellung herum liegt, d. h., wenn sowohl die Fahrgeschwindigkeit zwischen einer unteren Grenzgeschwindigkeit und einer oberen Grenzgeschwindigkeit liegt als auch die Auslenkung der Lenkhandhabe aus ihrer Geradeausstellung kleiner ist als ein Grenzauslenkungswinkel.

Unter einem Übersetzungsverhältnis, das in einem Geschwindigkeitsbereich und/oder einem Auslenkungswinkelbereich im Wesentlichen konstant ist, wird im vorliegenden Zusammenhang ein Übersetzungsverhältnis verstanden, dessen Grösse sich im angegebenen Geschwindigkeits- und Lenkungswinkelbereich nicht stärker verändert als die Grösse des Übersetzungsverhältnisses einer konventionellen Fahrzeuglenkung (d. h. einer Fahrzeuglenkung ohne variablem Übersetzungsverhältnis, wie z. B. einer Zahnstangenlenkung mit regelmässiger Zahnung) im selben Auslenkungswinkelbereich. In diesem Sinne werden Änderungen des Übersetzungsverhältnisses von einigen wenigen Prozent im gesamten in der Praxis bei einer bestimmten Fahrgeschwindigkeit nutzbaren Auslenkungswinkelbereich noch als konstantes Übersetzungsverhältnis betrachtet.

Mit anderen Worten ausgedrückt, bedeutet das, dass gemäss diesem Aspekt der Erfindung in sämtlichen Fällen, in denen sowohl die Fahrgeschwindigkeit in einem mittleren Geschwindigkeitsbereich zwischen der unteren Grenzgeschwindigkeit und der oberen Grenzgeschwindigkeit liegt als auch die Auslenkung der Lenkhandhabe aus ihrer Geradeausstellung in einem auf beiden Seiten der Geradeausstellung durch den Grenzauslenkungswinkel begrenzten mittleren Winkelbereich liegt, das Übersetzungsverhältnis im Wesentlichen konstant bleibt. Durch das im Wesentlichen konstante Übersetzungsverhältnis in einem mittleren Geschwindigkeits- und Auslenkungswinkelbereich wird erreicht, dass der Fahrer in diesem Parameterbereich nicht von unerwarteten Wirkungen der Fahrzeuglenkung überrascht wird. Dadurch wird die Sicherheit beim Fahren in dem am meisten benutzten Geschwindigkeits- und Auslenkungswinkelbereich verbessert. Es leuchtet ein, dass dieser Aspekt der Erfindung sich auch als vorteilhaft erweist für Fahrzeuglenkungen mit variablem Übersetzungsverhältnis, die nicht mit einem Überlagerungsgetriebe versehen sind, welches zwischen einer Steuerstange und einer quer zu dieser versetzt angeordneten Arbeitsstange wirkt.

Die untere Grenzgeschwindigkeit kann im Bereich zwischen ungefähr 20 und 50 km/h, insbesondere bei ungefähr 30 km/h liegen. Unterhalb dieser Grenzgeschwindigkeit werden mit einem Kraftfahrzeug typischerweise Fahrmanöver wie z. B. das Einparkieren des Fahrzeugs auf einen Parkplatz durchgeführt. Für solche Fahrmanöver ist eine Fahrzeuglenkung mit einer stark progressiven Lenkungscharakteristik von Vorteil, d. h. eine Lenkung, die mit zunehmender Auslenkung der Lenkhandhabe aus ihrer Geradeausstellung zunehmend direkter wird. Mit anderen Worten heisst das, dass das Übersetzungsverhältnis einer solchen Lenkung bei grossen Auslenkungswinkeln der Lenkhandhabe wesentlich grösser ist als im Bereich der Geradeausstellung der Lenkhandhabe.

Für die obere Grenzgeschwindigkeit hat sich ein Wert zwischen ungefähr 80 und 150 km/h als vorteilhaft erwiesen, insbesondere ein Wert von ungefähr 100 km/h. Die obere Grenzgeschwindigkeit kann insbesondere der maximal zulässigen Höchstgeschwindigkeit in einem bestimmten Land entsprechen. Dadurch wird gewährleistet, dass der Bereich mit im Wesentlichen konstantem Übersetzungsverhältnis nach oben erst bei Geschwindigkeiten verlassen wird, wie sie typischerweise lediglich auf vom öffentlichen Verkehr getrennten Rennstrecken gefahren werden. Die obere Grenzgeschwindigkeit kann je nach Fahrzeuggeometrie, insbesondere abhängig vom Radstand des zu lenkenden Fahrzeugs, gewählt werden. Zugunsten eines guten Geradeauslaufs kann es wünschenswert sein, das Übersetzungsverhältnis bei all denjenigen Geschwindigkeiten zu verkleinern, welche üblicherweise nur auf Autobahnen gefahren werden, also beispielsweise Geschwindigkeiten ab 100 km/h. Die erfindungsgemässe Fahrzeuglenkung erlaubt durch ihren Aufbau eine einfache Umstellung oder Anpassung der Grenzgeschwindigkeiten, indem die Steuerung für den Stellantrieb entsprechend anders eingestellt wird. Aufwändige mechanische Umbauten erübrigen sich.

Vorzugsweise ist die Fahrzeuglenkung weiter derart konstruiert, dass ausserhalb des oben erwähnten mittleren Parameterbereichs Änderungen des Übersetzungsverhältnisses in Abhängigkeit der Fahrgeschwindigkeit und/oder der Auslenkung der Lenkhandhabe stetig erfolgen. Dadurch werden abrupte Änderungen des Übersetzungsverhältnisses vermieden. Andernfalls könnten solche abrupte Änderungen den Fahrer überraschen und zu unerwünschten und mitunter gefährlichen Lenkungsmanövern verleiten.

Gemäss einer bevorzugten Ausführungsart der Erfindung weist eine Fahrzeuglenkung mit variablem Übersetzungsverhältnis, das in einem mittleren Geschwindigkeits- und Auslenkungsbereich jedoch konstant ist, ein mit einem Stellantrieb versehenes Überlagerungsgetriebe auf, das zwischen einer Steuerkomponente und einer Arbeitskomponente der Lenkung wirkt. Dabei ist die Steuerkomponente unter Einfluss der Lenkhandhabe bewegbar und die Arbeitskomponente ist unter Einfluss der Bewegung der Steuerkomponente und einer dieser Bewegungen mittels des Überlagerungsgetriebes überlagerten, von dessen Stellantrieb initiierten Relativbewegung zwischen der Steuerkomponente und der Arbeitskomponente bewegbar, wobei die Bewegung der Arbeitskomponente an das lenkbare Rad übertragen wird, um dieses zu lenken. Das im Wesentlichen konstante Übersetzungsverhältnis im mittleren Geschwindigkeits- und Auslenkungsbereich wird dadurch verwirklicht, dass dann, wenn sowohl die Fahrgeschwindigkeit zwischen der unteren Grenzgeschwindigkeit und der oberen Grenzgeschwindigkeit liegt als auch die Auslenkung der Lenkhandhabe aus ihrer Geradeausstellung kleiner ist als der Grenzauslenkungswinkel, der Stellantrieb blockiert ist. Die Blockierung des Stellantriebs bewirkt, dass keine vom Stellantrieb initiierten Relativbewegungen zwischen der Steuerkomponente und der Arbeitskomponente stattfinden.

Vorteilhafterweise ist für Fahrgeschwindigkeiten (insbesondere sogar sämtliche Fahrgeschwindigkeiten), die kleiner sind als die untere Grenzgeschwindigkeit, die Variabilität des Übersetzungsverhältnisses in Abhängigkeit der Auslenkung der Lenkhandhabe grösser als für Fahrgeschwindigkeiten (insbesondere sogar sämtliche Fahrgeschwindigkeiten), die grösser sind als die untere Grenzgeschwindigkeit. Das heisst, dass dann in einem Bereich mit kleinen Fahrgeschwindigkeiten (mitunter auch als Manövrierbereich bezeichnet) eine vergleichsweise grosse auslenkungswinkelabhängige Variabilität des Übersetzungsverhältnisses vorliegt. So kann z. B. in diesem Geschwindigkeitsbereich das Übersetzungsverhältnis in der Geradeausstellung der Lenkhandhabe einen Wert zwischen ungefähr 1:13 und 1:19, insbesondere einen Wert von ungefähr 1:16 aufweisen, wobei mit zunehmender Auslenkung der Lenkhandhabe das Übersetzungsverhältnis zunimmt und bei maximaler Auslenkung einen Wert zwischen ungefähr 1:12 und 1:6, insbesondere einen Wert von ungefähr 1:8 erreichen kann. Vorzugsweise nimmt in diesem Geschwindigkeitsbereich (d. h. im Manövrierbereich) auch die auslenkungsabhängige Variabilität des Übersetzungsverhältnisses zu mit abnehmender Fahrgeschwindigkeit, wobei jedoch vorteilhafterweise im gesamten Manövrierbereich die auslenkungsabhängige Variabilität grösser ist als die fahrgeschwindigkeitsabhängige Variabilität. Es kann aber auch vorgesehen sein, dass im gesamten Manövrierbereich eine im Wesentlichen lediglich auslenkungsabhängige Variabilität vorliegt, während die Variabilität in Abhängigkeit von der Fahrgeschwindigkeit in diesem Geschwindigkeitsbereich vernachlässigbar klein oder nicht vorhanden ist.

Weiter ist vorteilhafterweise für Fahrgeschwindigkeiten (insbesondere sogar sämtliche Fahrgeschwindigkeiten), die grösser sind als die obere Grenzgeschwindigkeit, die Variabilität des Übersetzungsverhältnisses in Abhängigkeit der Fahrgeschwindigkeit grösser als für Fahrgeschwindigkeiten (insbesondere sogar sämtliche Fahrgeschwindigkeiten), die kleiner sind als die obere Grenzgeschwindigkeit. Das heisst, dass dann in einem Bereich mit grossen Fahrgeschwindigkeiten (mitunter auch als Hochgeschwindigkeitsbereich bezeichnet) eine vergleichsweise grosse fahrgeschwindigkeitsabhängige Variabilität des Übersetzungsverhältnisses vorliegt. So kann z. B. in diesem Geschwindigkeitsbereich das Übersetzungsverhältnis in der Geradeausstellung der Lenkhandhabe im Bereich der oberen Grenzgeschwindigkeit einen Wert zwischen ungefähr 1:13 und 1:19, insbesondere einen Wert von ungefähr 1:16 aufweisen, wobei mit zunehmender Fahrgeschwindigkeit das Übersetzungsverhältnis in der Geradeausstellung zunimmt und bei maximaler Fahrgeschwindigkeit einen Wert zwischen ungefähr 1:20 und 1:30, insbesondere einen Wert von ungefähr 1:25 erreichen kann. Vorzugsweise nimmt in diesem Geschwindigkeitsbereich die geschwindigkeitsabhängige Variabilität des Übersetzungsverhältnisses zu mit zunehmender Fahrgeschwindigkeit. Vorzugsweise ist im Hochgeschwindigkeitsbereich die geschwindigkeitsabhängige Variabilität auch grösser als die auslenkungsabhängige Variabilität im gesamten bei diesen Fahrgeschwindigkeiten überhaupt nutzbaren Auslenkungsbereich. Es kann aber auch vorgesehen sein, dass im Hochgeschwindigkeitsbereich lediglich eine geschwindigkeitsabhängige Variabilität des Übersetzungsverhältnisses vorliegt, während die Variabilität in Abhängigkeit der Auslenkung der Lenkhandhabe vernachlässigbar klein oder nicht vorhanden ist. Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine vereinfachte schematische Darstellung einer Fahrzeuglenkung gemäss einer ersten bevorzugten Ausführungsart der Erfindung;
- Fig. 2: eine Zahnstange der Fahrzeuglenkung aus Fig. 1 in einer vereinfachten De- tailansicht;
- Fig. 3: eine vereinfachte schematische Detailansicht einer Fahrzeuglenkung ge- mäss einer zweiten bevorzugten Ausführungsart der Erfindung;
- Fig. 4: eine Partie einer Fahrzeuglenkung gemäss einer dritten bevorzugten Aus- führungsart der Erfindung in einer vereinfachten Detailansicht;
- Fig. 5: eine Partie einer Fahrzeuglenkung gemäss einer vierten bevorzugten Aus- führungsart der Erfindung in einer vereinfachten Detailansicht; und
- Fig. 6A, B: eine Partie einer Fahrzeuglenkung gemäss einer fünften bevorzugten Ausführungsart der Erfindung in einer vereinfachten Aussenansicht und in einem Querschnitt entlang der Symmetrieachsen der Steuer- und der Arbeitsstange.

Grundsätzlich sind in den Figuren gleiche Teile mit gleichen Bezugszeichen versehen.

### Wege zur Ausführung der Erfindung

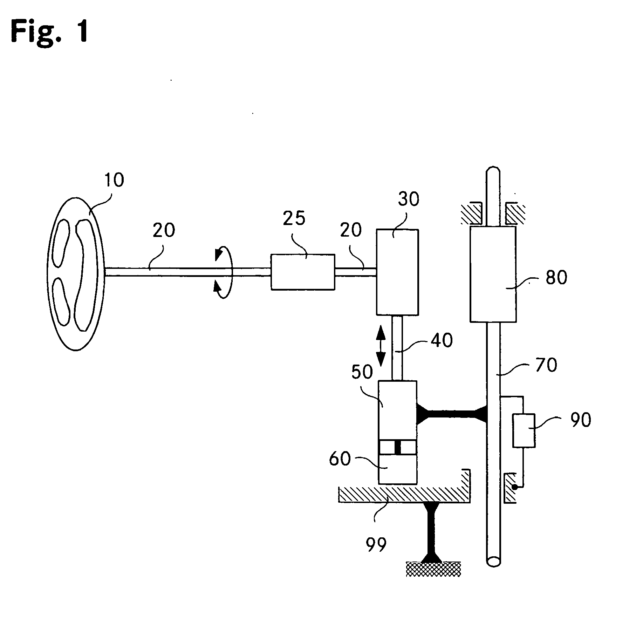

Die in Fig. 1 dargestellte Fahrzeuglenkung hat ein Lenkrad 10, das fest mit einer Lenkspindel 20 verbunden ist. Lenkbewegungen, die von einem Fahrer am Lenkrad 10 ausgeübt werden, werden über die Lenkspindel 20 und über ein Lenkgetriebe 30 auf eine Stange 40 übertragen, die nachfolgend als Steuerstange 40 bezeichnet wird.

Die Steuerstange 40 hat eine mit einer Zahnung versehene erste Stangenpartie 41, in welcher sie als Zahnstange 40 wirkt. Das Lenkgetriebe 30 ist ein Zahnstangenlenkgetriebe. Die von der Lenkspindel 20 in das Lenkgetriebe 30 eingespeisten rotatorischen Lenkbewegungen werden vom Lenkgetriebe 30 in translatorische Schiebebewegungen der Steuerstange 40 übertragen. Durch diese Schiebebewegungen wird die Steuerstange 40 in Richtung der Steuerstangenlängsrichtung bezüglich dem Fahrzeug 99 verschoben.

Anschliessend an die erste Stangenpartie 41 hat die Steuerstange 40 eine zweite Stangenpartie 42 mit im Wesentlichen glatter Oberfläche. An die zweite Stangenpartie 42 (auch als Verbindungspartie 42 bezeichnet) schliesst eine dritte Stangenpartie 43 an, die mit einem Aussengewinde versehen ist. In ihrer dritten Stangenpartie 43 ist die Steuerstange 40 als Gewindespindel 40 ausgebildet, die nach Art eines Spindel-Mutter-Triebs mit einer Umlaufmutter zusammenwirkt.

Die Umlaufmutter ist in einem Getriebegehäuse 50 eines Überlagerungsgetriebes bezüglich dem Getriebegehäuse 50 um eine Drehachse herum drehbar und in Richtung der Drehachse bezüglich dem Getriebegehäuse 50 unverschiebbar gelagert. Die dritte Stangenpartie 43 greift mit ihrem Aussengewinde in ein diesem entsprechendes Innengewinde der Umlaufmutter ein, so dass die Umlaufmutter und die Steuerstange 40 nach Art eines Spindel-Mutter-Triebs zusammenwirken. Am Getriebegehäuse 50 ist weiter ein mit einem Elektromotor 60 versehener Drehantrieb angebracht, mittels dem die Umlaufmutter zur Drehung um ihre Drehachse herum antreibbar ist. Wenn sich die Umlaufmutter um ihre Drehachse herum dreht, wird dadurch aufgrund des durch die Umlaufmutter und die Steuerstange 40 gebildeten Spindel-Mutter-Triebs das Getriebegehäuse 50 bezüglich der Steuerstange 40 in Stangenlängsrichtung verschoben. Durch Drehung der Umlaufmutter kann somit die durch die Lenkspindel 20 und das Lenkgetriebe 30 bewirkten Verschiebebewegung der Steuerstange 40 eine durch den Elektromotor 60 und den aus der Umlaufmutter und die Steuerstange 40 gebildeten Spindel-Mutter-Trieb bewirkten Relatiwerschiebebewegung zwischen dem Getriebegehäuse 50 und der Steuerstange 40 überlagert werden.

Das Getriebegehäuse 50 ist fest mit einer Spurstange 70 verbunden, welche parallel zur Steuerstange 40 und von dieser quer zur Längsrichtung der Steuerstange 40 (und somit auch quer zur Längsrichtung der Spurstange 70) in einem Abstand versetzt angeordnet ist. Aufgrund der festen Verbindung mit dem Getriebegehäuse 50 wird die Spurstange 70 zusammen mit dem Getriebegehäuse 50 längs zur Spurstange 70 (und somit auch längs zur Arbeitsstange 40) bezüglich dem Fahrzeug 99 verschoben, wenn das Getriebegehäuse 50 aufgrund von durch die Lenkspindel 20 und/oder den Elektromotor 60 initiierten Lenkbewegungen bezüglich dem Fahrzeug 99 verschoben wird. Die Verschiebebewegungen der Spurstange 70 werden über eine weitere Partie des Lenkgestänges (nicht dargestellt) an zwei lenkbare Fahrzeugräder (nicht dargestellt) übertragen, um diese zu lenken.

Der Elektromotor 60 wird über eine Steuerungsvorrichtung (nicht dargestellt) gesteuert und mit Strom versorgt. Die Steuerungsvorrichtung empfängt Messsignale von einem an der Lenkspindel 20 angeordneten Lenkspindelsensor 25, der die Auslenkung der Lenkspindel 20 aus ihrer Geradeausstellung und die über das Lenkrad 10 vom Fahrer ausgeübten Lenkmomente misst, einem Geschwindigkeitssensor (nicht dargestellt), der die Fahrgeschwindigkeit misst, und einem im Bereich der Spurstange 70 angeordneten Wegaufnehmer 90, der die Verschiebung der Spurstange 70 gegenüber dem Fahrzeug 99 misst. In Abhängigkeit dieser Messsignale regelt die Steuerungsvorrichtung den elektrischen Strom zum Elektromotor 60 sowie einen Servoantrieb 80, welcher Verschiebebewegungen der Spurstange 70 bezüglich dem Fahrzeug 99 nach Art eines Servoantriebs einer gebräuchlichen Servolenkung unterstützt.

Die Steuerungsvorrichtung steuert den Elektromotor 60 derart, dass der Elektromotor 60 blockiert ist, wenn sowohl die Fahrgeschwindigkeit zwischen einer Geschwindigkeit von 30 km/h und 100 km/h liegt als auch die Auslenkung des Lenkrads 10 aus seiner Geradeausstellung kleiner ist als 180°. Weiter wird der Elektromotor 60 von der Steuerungsvorrichtung derart gesteuert, dass für Fahrgeschwindigkeiten unterhalb von 30 km/h das Übersetzungsverhältnis in der Geradeausstellung des Lenkrads 1:16 beträgt und mit zunehmender Auslenkung des Lenkrads 10 bis auf einen Wert von 1:8 bei maximaler Auslenkung des Lenkrads 10 ansteigt. Bei Fahrgeschwindigkeiten oberhalb von 100 km/h wird der Elektromotor 60 von der Steuerungsvorrichtung derart gesteuert, dass das Übersetzungsverhältnis in der Geradeausstellung von einem Wert 1:16 bei 100 km/h mit zunehmender Fahrgeschwindigkeit auf einen Wert von ungefähr 1:25 bei maximaler Fahrgeschwindigkeit abfällt. Bei Autos mit einem grösseren Radstand oder bei Wagen für den Renneinsatz kann die obere Grenzgeschwindigkeit anstelle von 100 km/h höher gewählt werden, beispielsweise 130 km/h.

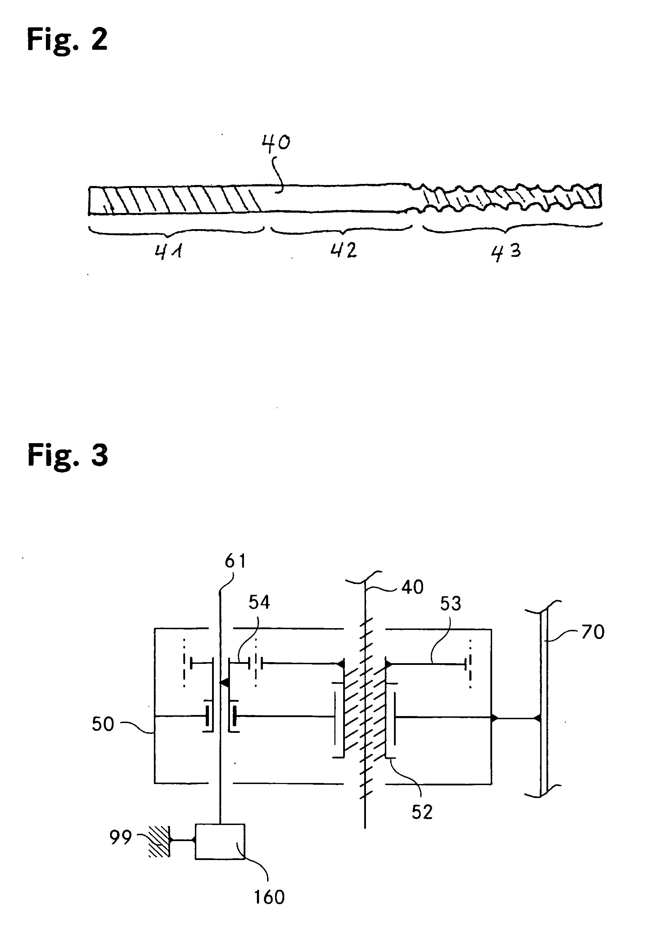

Die in Fig. 3 dargestellte Fahrzeuglenkung unterscheidet sich von der in Fig. 1 dargestellten Fahrzeuglenkung dadurch, dass der Elektromotor 160 des Drehantriebs für die Umlaufmutter 52 nicht am Getriebegehäuse 50, sondern am Fahrzeug 99 angeordnet ist. Der Elektromotor 160 dreht eine Antriebswelle 61 bezüglich dem Fahrzeug 99 zur Drehung um ihre Wellenachse herum an. Die Wellenachse der Antriebswelle 61 verläuft parallel zur Steuerstange 40 und zur Spurstange 70. Die Antriebswelle 61 ist durch das Zentrum eines Zahnrads 54 hindurch geführt, das um eine zur Wellenachse der Antriebswelle 61 koaxiale Drehachse herum drehbar und längs zu dieser Drehachse unverschiebbar im Getriebegehäuse 50 gelagert ist. Die Antriebswelle ist drehfest, aber in Wellenlängsrichtung bezüglich dem Zahnrad 54 verschiebbar mit dem Zahnrad 54 verbunden.

Das Zahnrad 54 kämmt mit einem weiteren Zahnrad 53, das fest mit der Umlaufmutter 52 verbunden und zusammen mit dieser um deren Drehachse herum drehbar ist. Insgesamt wird durch die Antriebswelle 61 sowie die beiden Zahnräder 53, 54 ein Drehantriebsgetriebe gebildet, über welches der Elektromotor 160 die Umlaufmutter 52 zur Drehung um ihre Drehachse herum antreiben kann, wobei das Gehäuse 50 des Überlagerungsgetriebes mitsamt der Umlaufmutter 52 und den Zahnrädern 53, 54 in Wellenlängsrichtung bezüglich dem Elektromotor verschiebbar ist.

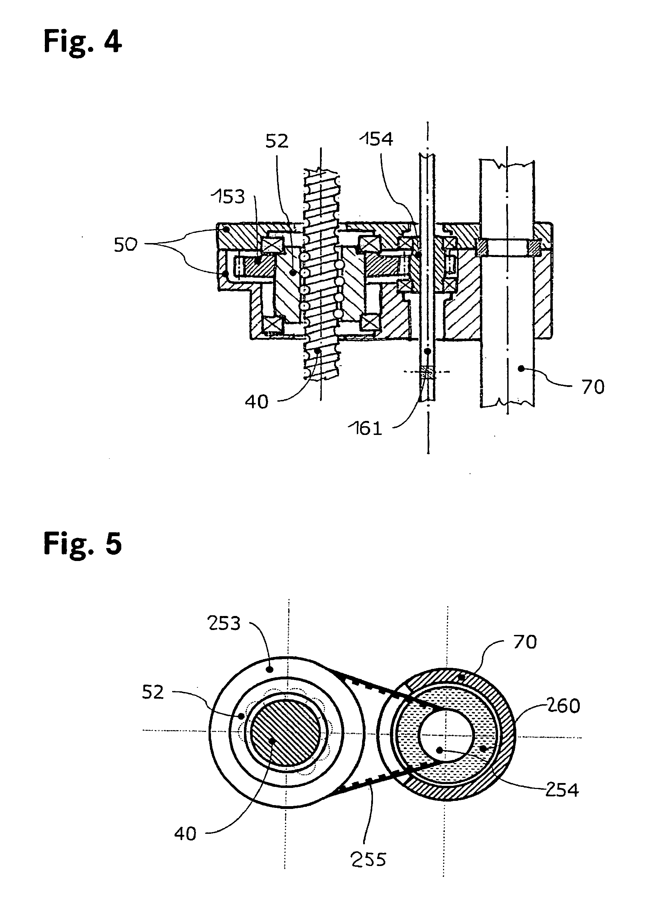

Die in Fig. 4 dargestellte Fahrzeuglenkung unterscheidet sich von der in Fig. 3 dargestellten Fahrzeuglenkung lediglich dadurch, dass die Antriebswelle 161 zwischen der Steuerstange 40 und der Spurstange 70 angeordnet ist, während bei der in Fig. 3 dargestellten Fahrzeuglenkung die Steuerstange 40 zwischen der Antriebswelle 61 und der Spurstange 70 angeordnet ist. Entsprechend ist bei der in Fig. 4 dargestellten Fahrzeuglenkung das mit der Antriebswelle 161 verbundene Zahnrad 154 zwischen dem mit der Umlaufmutter 52 verbundenen Zahnrad 153 und der Spurstange 70 angeordnet, während bei der in Fig. 3 dargestellten Fahrzeuglenkung das mit der Umlaufmutter 52 verbundene Zahnrad 53 zwischen dem mit der Antriebswelle 61 verbundenen Zahnrad 54 und der Spurstange 70 angeordnet ist.

Die in Fig. 5 dargestellte Fahrzeuglenkung unterscheidet sich von in den vorangehenden Figuren dargestellten Fahrzeuglenkungen dadurch, dass der Elektromotor 260 des Drehantriebs für die Umlaufmutter 52 in einem Hohlraum der Spurstange 70 angeordnet ist. Der Elektromotor 260 dreht ein Zahnrad 254 bezüglich der Spurstange 70 zur Drehung um eine Drehachse herum an, die mit der Längsachse der Spurstange 70 zusammenfällt und somit parallel zur Drehachse der Umlaufmutter 52 ist.

Das Zahnrad 254 treibt über einen Zahnriemen 255 ein weiteres Zahnrad 253 an, das fest mit der Umlaufmutter 52 verbunden und zusammen mit dieser um deren Drehachse herum drehbar ist. Insgesamt wird durch den Zahnriemen 255 sowie die beiden Zahnräder 253, 254 ein Drehantriebsgetriebe gebildet, über welches der im Innern der Spurstange 70 angeordnete Elektromotor 260 die Umlaufmutter 52 zur Drehung um ihre Drehachse herum antreiben kann.

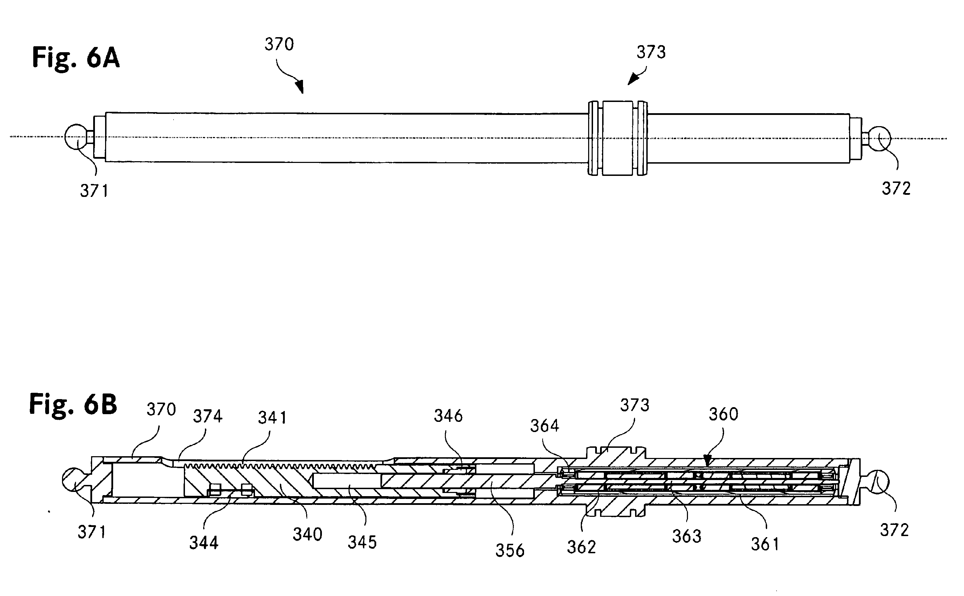

Die Figuren 6A, 6B zeigen eine Partie einer Fahrzeuglenkung gemäss einer fünften bevorzugten Ausführungsart der Erfindung. Die Figur 6A zeigt eine vereinfachte Aussenansicht, die Figur 6B einen Querschnitt entlang der Symmetrieachsen der Steuer- und der Arbeitsstange. Dargestellt ist die Spurstange 370 (Arbeitsstange), welche an ihren Enden je eine Gelenkkugel 371, 372 aufweist, mittels welchen sie an weitere Elemente des Lenkgestänges, beispielsweise an die Lenkhebel für die beiden Vorderräder eines Fahrzeugs, koppelbar ist. Die Spurstange 370 verläuft somit durchgehend vom Lenkhebel des ersten lenkbaren Rades zum Lenkhebel des zweiten lenkbaren Rades. Aussen an der Spurstange 370 ist weiter ein Kolbenabschnitt 373 ausgebildet, welcher Teil eines (nicht weiter dargestellten) an sich bekannten hydraulischen Servoantriebs zur Lenkunterstützung ist.

Das Überlagerungsgetriebe ist nun innerhalb der Spurstange 370 ausgebildet. Es umfasst eine Steuerstange 340, welche in einem Hohlraum der Spurstange 370 über ein Gleitlager axial verschiebbar aber drehfest gelagert ist. Die Steuerstange 340 umfasst eine Stangenpartie 341 mit einer Zahnung, welche mit einem (nicht dargestellten) Ritzel der Lenkwelle derart zusammenwirken kann, dass in Abhängigkeit der Drehstellung der Lenkspindel die Steuerstange 340 in axialer Richtung hin und her bewegt wird. Für die Zahnung kann eine Gerad- oder eine Schrägverzahnung gewählt werden. Durch den Einsatz einer variablen Zahnteilung kann das Übersetzungsverhältnis der Lenkung abhängig vom Drehwinkel der Lenksäule variabel, insbesondere progressiv, vorgegeben werden. Damit das Ritzel der Lenkwelle in die Zahnung der Steuerstange 340 eingreifen kann, weist der Mantel der Arbeitsstange 370 im entsprechenden Abschnitt eine durchgehende Öffnung 374 auf. Gegenüber der Zahnung ist in der Stangenpartie 341 weiter ein Anpresslager 344 ausgebildet, welches Federmittel umfasst, mittels welchen ein radial bewegliches Gleitlager an der Steuerstange 340 befestigt ist. Das Gleitlager wirkt mit der Führung innerhalb der Spurstange 370 zusammen und unterdrückt Spiel zwischen der Zahnung und dem Ritzel der Lenkwelle.

An dem der Stangenpartie 341 mit der Zahnung gegenüberliegenden Ende der Steuerstange 340 ist eine Aufnahme 345 für eine Spindel 356 eines Kugelumlauftriebs ausgebildet. Die Aufnahme 345 ist eine axiale Bohrung in der Steuerstange 340, deren Innendurchmesser geringfügig grösser ist als der Aussendurchmesser der Spindel 356, so dass Letztere innerhalb der Bohrung geführt werden kann. Am offenen Ende der Bohrung, d. h. an der Stirnseite der Steuerstange 340, ist das Kugelumlauflager 346 fest angeordnet. Diese bildet ein Lager für die Spindel 356 an der Steuerstange 340. Durch Variieren der Länge der Steuerstange 340 lässt sich die Dämpfung der Lenkung anpassen; bei Verwendung einer kurzen Steuerstange ergibt sich eine harte, bei Verwendung einer langen Steuerstange eine eher weiche Auslegung.

In einem weiteren Hohlraum der Spurstange 370, nahe dem der Steuerstange gegenüberliegenden Ende der Spurstange 370, ist ein Elektromotor 360 untergebracht. Dieser ist einer elastischen Motorhalterung 361 aus Stahl gehalten, welche den Motor mantelartig umgibt und eine dämpfende Wirkung zwischen der Spurstange 370 und dem Elektromotor 360 hat. Wird eine andere Dämpfung gewünscht, kann die Motorhalterung auch aus einem anderen Material, beispielsweise aus einem Kunststoff, gefertigt werden. Zur Erhöhung der Dämpfung kann zwischen der hinteren, dem Spurstangenende zugewandten Stirnseite des Elektromotors 360 und dem Abschluss des Hohlraums zusätzlich eine elastische Scheibe eingesetzt werden.

Der Elektromotor 360 entspricht dem in der DE 102 40 704 A1 (Tirron Elektronik GmbH) offenbarten Typ mit einem Stator 362 mit Spulenkörpern und einem Rotor 363 mit einer Reihe von Dauermagneten. Am Rotor 363 ist drehfest die Spindel 356 angebracht. Weil der Elektromotor 360 aufgrund seiner Konstruktion geringe Drehzahlen bei hohem Drehmoment erzeugen kann, erübrigt sich ein zusätzliches Getriebe. Am der Steuerstange 340 zugewandten stirnseitigen Ende des Elektromotors 360 ist ein Drehlager 364 für die Spindel 356 im Hohlraum der Spurstange 370 befestigt.

Die Funktionsweise der in den Figuren 6A, 6B Fahrzeuglenkung gemäss der fünften bevorzugten Ausführungsart der Erfindung ist wie folgt: Die Drehbewegung der Lenkspindel wird über das Lenkgetriebe auf eine Lenkwelle übertragen und von dieser über das Ritzel und die Zahnung in der Stangenpartie 341 in eine translatorische Bewegung der Steuerstange 340 umgewandelt. Diese Bewegung wird zunächst via Spindel 356 und den axial unverschiebbar an der Spurstange 370 angebrachten Elektromotor 360 auf die Spurstange 370 und von dieser auf die weiteren Elemente des Lenkgestänges (insbesondere direkt auf die Lenkhebel) übertragen. Der ausgehend von der Lenkspindel erzeugten axialen Bewegung der Steuerstange 340 kann nun eine weitere axiale Bewegung überlagert werden, wenn die Spindel 356 mittels des Elektromotors 360 relativ zur Spurstange 370 gedreht wird. Dies führt nämlich dazu, dass sich die Spindel 356 bezüglich der Steuerstange 340 axial bewegt und somit die Position der Spurstange 370 bezüglich des Lenkgetriebes unabhängig von der durch die Lenkspindel vorgegebenen Stellung beeinflusst werden kann.

Zusätzlich zu dieser Funktionalität wirkt - besonders bei kleinen Fahrgeschwindigkeiten - auch der bekannte hydraulische Servoantrieb zur Lenkunterstützung über den Kolbenabschnitt 373 in bekannter Art und Weise auf die Lenkung ein. Alternativ kann die dargestellte Spurstange mit Überlagerungsgetriebe auch mit einem elektrischen Servoantrieb zur Lenkunterstützung zusammenwirken. In diesem Fall ist der Kolbenabschnitt 373 durch ein entsprechendes Anschlussstück ersetzt.

Zusammenfassend ist festzustellen, dass durch die Erfindung eine Fahrzeuglenkung mit einem variablen Übersetzungsverhältnis angegeben wird, die auf einem neuen Konzept beruht.

## Patentansprüche

1. Fahrzeuglenkung mit variablem Übersetzungsverhältnis für ein mit wenigstens einem lenkbaren Rad versehenes Fahrzeug (99), mit einem Lenkgestänge, das wenigstens eine Steuerstange (40; 340) und eine Arbeitsstange (70; 370) aufweist, sowie einem mit einem Stellantrieb (60; 160; 260; 360) versehenen Überlagerungsgetriebe, das zwischen der Steuerstange (40; 340) und der Arbeitsstange (70; 370) wirkt, wobei die Steuerstange (40; 340) unter Einfluss einer Lenkspindel (20) und eines Lenkgetriebes (30) in Steuerstangenlängsrichtung verschiebbar ist, die Arbeitsstange (70; 370) unter Einfluss der Verschiebebewegung der Steuerstange (40; 340) und einer dieser Verschiebebewegung mittels des Überlagerungsgetriebes überlagerten, von dessen Stellantrieb (60; 160; 260; 360) initiierten Relativverschiebebewegung zwischen der Steuerstange (40; 340) und der Arbeitsstange (70; 370) in Arbeitsstangenlängsrichtung verschiebbar ist, und wobei die Verschiebebewegung der Arbeitsstange (70; 370) über eine Partie des Lenkgestänges an das lenkbare Rad übertragen wird, um dieses zu lenken, wobei das Überlagerungsgetriebe eine Spindel (43; 356) und eine mit dieser nach Art eines Spindel-Mutter-Triebes zusammenwirkende Mutter (52; 346) umfasst, **dadurch gekennzeichnet, dass** ein erster Getriebeteil (43; 346) eines aus der Spindel (43; 356) und der Mutter (52; 346) gebildeten Getriebeteilepaares fest mit einer ersten Stange (40; 340) eines aus der Steuerstange (40; 340) und der Arbeitsstange (70; 370) gebildeten Stangenpaares verbunden ist, der zweite Getriebeteil (52; 356) des Getriebeteilepaares bezüglich der zweiten Stange (70; 370) des Stangenpaares drehbar an der zweiten Stange (70; 370) gelagert ist und der Stellantrieb (60; 160; 260; 360) ausgebildet und angeordnet ist, um den zweiten Getriebeteil (52; 356) zur Drehung bezüglich der zweiten Stange (70; 370) anzutreiben.

2. Fahrzeuglenkung nach Anspruch 1, **dadurch gekennzeichnet, dass** der erste Getriebeteil des Getriebeteilepaares die Mutter (346) ist und dass die erste Stange des Stangenpaares die Steuerstange (340) ist.

3. Fahrzeuglenkung nach Anspruch 1 oder 2, **dadurch gekennzeichnet, dass** die Steuerstange (40; 340) eine erste Stangenpartie (41; 341) aufweist mit einer Zahnung, wobei die erste Stangenpartie (41; 341) mit dem Lenkgetriebe zusammenwirkt, und dass die Steuerstange (40; 340) eine zweite Stangenpartie (43; 345, 346) aufweist, welche den ersten Getriebeteil bildet.

4. Fahrzeuglenkung nach einem der Ansprüche 1 bis 3, **dadurch gekennzeichnet, dass** die Arbeitsstange (370) einen Hohlraum aufweist, in welchem die Steuerstange (340) angeordnet ist.

5. Fahrzeuglenkung nach Anspruch 3 und 4, **dadurch gekennzeichnet, dass** ein Mantel der Arbeitsstange (370) eine durchgehende Öffnung (374) aufweist, durch welche hindurch das Lenkgetriebe mit der in der Arbeitsstange (370) aufgenommenen Steuerstange (340) zusammenwirken kann.

6. Fahrzeuglenkung nach Anspruch 4 oder 5, **dadurch gekennzeichnet dass** der Stellantrieb (360) im Hohlraum der Arbeitsstange (370) angeordnet ist.

7. Fahrzeuglenkung nach Anspruch 6, **dadurch gekennzeichnet, dass** der Stellantrieb einen hochpoligen Wechselstrom-Elektromotor (360) umfasst.

8. Fahrzeuglenkung nach Anspruch 6 oder 7, **dadurch gekennzeichnet, dass** im Hohlraum der Arbeitsstange (370) eine Motoraufnahme (361) angeordnet ist, wobei der Stellantrieb (360) in oder an der Motoraufnahme (361) befestigt ist und wobei die Motoraufnahme (361) elastisch ausgebildet ist.

9. Fahrzeuglenkung nach einem der Ansprüche 1 bis 5, **dadurch gekennzeichnet, dass** der Stellantrieb einen vom zweiten Getriebeteil (52) distanzierten Antriebsmotor (60, 160, 260) umfasst und über ein Drehantriebsgetriebe mit dem zweiten Getriebeteil (52) gekoppelt ist, um diesen zur Drehung bezüglich der zweiten Stange anzutreiben.

10. Fahrzeuglenkung nach einem der Ansprüche 1 bis 3 oder 9, **dadurch gekennzeichnet, dass** die Arbeitsstange (70) in einem Abstand quer zur Steuerstangenlängsrichtung von der Steuerstange (40) versetzt angeordnet ist.

11. Fahrzeuglenkung nach einem der Ansprüche 1 bis 10, **dadurch gekennzeichnet, dass** das Überlagerungsgetriebe und das Lenkgestänge derart ausgebildet und angeordnet sind, dass durch eine Drehstellung der Lenkspindel (20) vorgegebene Lenkwinkel durch Betätigen des Stellantriebs (60; 160; 260; 360) für zwei lenkbare Räder auf dieselbe Weise wie bei einer Veränderung der Drehstellung beeinflusst werden.

12. Fahrzeuglenkung nach Anspruch 11, **dadurch gekennzeichnet, dass** das Überlagerungsgetriebe ein einziges Abtriebsglied (70; 370) hat, welches ausschliesslich über Schwenkgelenke und starre Verbindungsglieder mit sowohl dem ersten als auch dem zweiten von zwei lenkbaren Rädern verbunden ist.

13. Fahrzeuglenkung nach Anspruch 12, **dadurch gekennzeichnet, dass** das Abtriebsglied die Arbeitsstange (70; 370) umfasst, wobei diese durchgehend von einem ersten Lenkhebel des ersten lenkbaren Rades zu einem zweiten Lenkhebel des zweiten lenkbaren Rades ausgebildet ist.

14. Fahrzeuglenkung nach einem der Ansprüche 1 bis 13 für ein mit wenigstens einem lenkbaren Rad versehenes Fahrzeug, mit einer Lenkhandhabe (10), welche mit dem lenkbaren Rad gekoppelt ist, um dieses zu lenken, wobei zwischen einem Drehwinkel der Lenkhandhabe und einem Schwenkwinkel des lenkbaren Rads ein Übersetzungsverhältnis vorliegt, **gekennzeichnet durch** eine Steuerungsvorrichtung, **durch** welche das Übersetzungsverhältnis entsprechend einem Kennfeld zumindest in Abhängigkeit von der Auslenkung der Lenkhandhabe aus einer Geradeausstellung und von der Fahrgeschwindigkeit derart veränderbar ist, dass das Übersetzungsverhältnis im Wesentlichen konstant ist, wenn sowohl die Fahrgeschwindigkeit zwischen einer unteren Grenzgeschwindigkeit und einer oberen Grenzgeschwindigkeit liegt als auch die Auslenkung der Lenkhandhabe (10) aus der Geradeausstellung kleiner ist als ein Grenzauslenkungswinkel.

15. Fahrzeuglenkung nach Anspruch 14, **dadurch gekennzeichnet, dass** sie ein mit einem Stellantrieb (60; 160; 260; 360) versehenes Überlagerungsgetriebe aufweist, das zwischen einer Steuerkomponente (40; 340) und einer Arbeitskomponente (70; 370) der Lenkung wirkt, wobei die Steuerkomponente (40; 340) unter Einfluss der Lenkhandhabe (10) bewegbar ist, die Arbeitskomponente (70; 370) unter Einfluss der Bewegung der Steuerkomponente (40; 340) und einer dieser Bewegung mittels des Überlagerungsgetriebes überlagerten, von dessen Stellantrieb (60; 160; 260; 360) initiierten Relativbewegung zwischen der Steuerkomponente (40; 340) und der Arbeitskomponente (70; 370) bewegbar ist, und wobei die Bewegung der Arbeitskomponente (70; 370) an das lenkbare Rad übertragen wird, um dieses zu lenken, und wobei im Falle, dass sowohl die Fahrgeschwindigkeit zwischen der unteren Grenzgeschwindigkeit und der oberen Grenzgeschwindigkeit liegt als auch die Auslenkung der Lenkhandhabe (10) aus der Geradeausstellung kleiner ist als der Grenzauslenkungswinkel, der Stellantrieb blockiert ist.

16. Fahrzeuglenkung nach Anspruch 14 oder 15, **dadurch gekennzeichnet, dass** für Fahrgeschwindigkeiten, die kleiner sind als die untere Grenzgeschwindigkeit die Variabilität des Übersetzungsverhältnisses in Abhängigkeit der Auslenkung grösser ist als für Fahrgeschwindigkeiten, die grösser sind als die untere Grenzgeschwindigkeit.

17. Fahrzeuglenkung nach einem der Ansprüche 14 bis 16, **dadurch gekennzeichnet, dass** für Fahrgeschwindigkeiten, die grösser sind als die obere Grenzgeschwindigkeit die Variabilität des Übersetzungsverhältnisses in Abhängigkeit der Fahrgeschwindigkeit grösser ist als für Fahrgeschwindigkeiten, die kleiner sind als die obere Grenzgeschwindigkeit.

## Claims

1. A vehicle steering system with a variable transmission ratio for a vehicle (99) which is provided with at least one steerable wheel, with a steering linkage which has at least one control rod (40; 340) and a working rod (70; 370), as well as a variable ratio gear unit which is provided with an actuator drive (60; 160; 260; 360) and acts between the control rod (40; 340) and the working rod (70; 370), the control rod (40; 340) being displaceable in the longitudinal direction of the control rod under the influence of a steering spindle (20) and a steering gearing (30), the working rod (70; 370) being displaceable in the longitudinal direction of the working rod under the influence of the displacement movement of the control rod (40; 340) and a relative displacement movement between the control rod (40; 340) and the working rod (70; 370), said relative displacement movement being superimposed on the displacement movement of the control rod (40; 340) by means of the variable ratio gear unit and being initiated by the actuator drive (60; 160; 260; 360) of said variable ratio gear unit, and the displacement movement of the working rod (70; 370) being transmitted to the steerable wheel via part of the steering linkage in order to steer said wheel, the variable ratio gear unit comprising a spindle (43; 356) and a nut (52; 346) which interacts with the latter in the manner of a spindle-nut drive, **characterized in that** a first gearing part (43; 346) of a pair of gearing parts formed from the spindle (43; 356) and the nut (52; 346) is permanently connected to a first rod (40; 340) of a pair of rods which is formed from the control rod (40; 340) and the working rod (70; 370), the second gearing part (52; 356) of the pair of gearing parts is mounted on the second rod (70; 370) so as to be rotatable with respect to the second rod (70; 370) of the pair of rods, and the actuator drive (60; 160; 260; 360) is embodied and arranged so as to drive the second gearing part (52; 356) to rotate with respect to the second rod (70; 370).

2. The vehicle steering system as claimed in claim 1, **characterized in that** the first gearing part of the pair of gearing parts is the nut (346), and **in that** the first rod of the pair of rods is the control rod (340).

3. The vehicle steering system as claimed in claim 1 or 2, **characterized in that** the control rod (40; 340) has a first rod part (41; 341) with a toothing, the first rod part (41; 341) interacting with the steering gearing, and wherein the control rod (40; 340) has a second rod part (43; 345, 346) which forms the first gearing part.

4. The vehicle steering system as claimed in one of claims 1 to 3, **characterized in that** the working rod (370) has a cavity in which the control rod (340) is arranged.

5. The vehicle steering system as claimed in claim 3 and 4, **characterized in that** a casing of the working rod (370) has a continuous opening (374) through which the steering gearing can interact with the control rod (340) which is held in the working rod (370).

6. The vehicle steering system as claimed in claim 4 or 5, **characterized in that** the actuator drive (360) is arranged in the cavity of the working rod (370).

7. The vehicle steering system as claimed in claim 6, **characterized in that** the actuator drive comprises an alternating current electric motor (360) with a high number of poles.

8. The vehicle steering system as claimed in claim 6 or 7, **characterized in that** a motor receptacle (361) is arranged in the cavity of the working rod (370), the actuator drive (360) being mounted in or on the motor receptacle (361), and the motor receptacle (361) being of elastic design.

9. The vehicle steering system as claimed in one of claims 1 to 5, **characterized in that** the actuator drive comprises a drive motor (60, 160, 260) which is spaced apart from the second gearing part (52) and is coupled via a rotary drive gearing to the second gearing part (52) in order to drive it to rotate with respect to the second rod.

10. The vehicle steering system as claimed in one of claims 1 to 3 or 9, **characterized in that** the working rod (70) is arranged offset from the control rod (40) at a distance transversely with respect to the longitudinal direction of the control rod.

11. The vehicle steering system as claimed in one of claims 1 to 10, **characterized in that** the variable ratio gear unit and the steering linkage are embodied and arranged in such a way that steering angles which are predefined by a rotary position of the steering spindle (20) are influenced by activating the actuator drive (60; 160; 260; 360) for two steerable wheels in the same way as when the rotary position changes.

12. The vehicle steering system as claimed in claim 11, **characterized in that** the variable ratio gear unit has a single output element (70; 370) which is connected exclusively by means of pivoting joints and rigid connecting elements to both the first and the second of two steerable wheels.

13. The vehicle steering system as claimed in claim 12, **characterized in that** the output element comprises the working rod (70; 370), the latter being embodied in a continuous fashion from a first steering lever of the first steerable wheel to a second steering lever of the second steerable wheel.

14. The vehicle steering system as claimed in one of claims 1 to 13, for a vehicle which is provided with at least one steerable wheel, with a steering handle (10) which is coupled to the steerable wheel in order to steer it, a transmission ratio being present between an angle of rotation of the steering handle and a pivoting angle of the steerable wheel, **characterized by** a control device, which can change the transmission ratio in accordance with a characteristic diagram, at least as a function of the deflection of the steering handle from a straight-ahead position and as a function of the driving speed in such a way, that the transmission ratio is essentially constant if both the driving speed is between a lower limiting speed and an upper limiting speed and the deflection of the steering handle (10) from the straight-ahead position is smaller than a limiting deflection angle.

15. The vehicle steering system as claimed in claim 14, **characterized in that** it has a variable ratio gear unit which is provided with an actuator drive (60; 160; 260; 360) and which acts between a control component (40; 340) and a working component (70; 370) of the steering system, the control component (40; 340) being movable under the influence of the steering handle (10), the working component (70; 370) being movable under the influence of the movement of the control component (40; 340) and a relative movement between the control component (40; 340) and the working component (70; 370), said relative movement being superimposed on the movement of the control component (40; 340) by means of the variable ratio gear unit and being initiated by the actuator drive (60; 160; 260; 360) of said variable ratio gear unit, and the movement of the working component (70; 370) being transmitted to the steerable wheel in order to steer it, and the actuator drive being blocked if both the driving speed is between the lower limiting speed and the upper limiting speed and the deflection of the steering handle (10) from the straight-ahead position is smaller than the limiting deflection angle.

16. The vehicle steering system as claimed in claim 14 or 15, **characterized in that** for driving speeds which are lower than the lower limiting speed the variability of the transmission ratio as a function of the deflection is greater than for driving speeds which are higher than the lower limiting speed.

17. The vehicle steering system as claimed in one of claims 14 to 16, **characterized in that** for driving speeds which are higher than the upper limiting speed the variability of the transmission ratio as a function of the driving speed is higher than for driving speeds which are lower than the upper limiting speed.

## Revendications

1. Système de direction automobile présentant un rapport de démultiplication variable, pour un véhicule (99) doté d'au moins une roue directrice, comprenant une tringlerie de direction, qui comprend au moins une tringle de commande (40 ; 340) et une tringle de travail (70 ; 370), ainsi qu'un mécanisme de superposition équipé d'un entraînement de positionnement (60 ; 160 ; 260 ; 360), mécanisme qui agit entre la tringle de commande (40 ; 340) et la tringle de travail (70 ; 370), dans lequel la tringle de commande (40 ; 340) est déplaçable dans la direction longitudinale de la tringle de commande sous l'influence d'une broche de direction (20) et d'un mécanisme de direction (30), la tringle de travail (70 ; 370) est déplaçable dans la direction longitudinale de la tringle de travail sous l'influence du mouvement de déplacement de la tringle de commande (40 ; 340) et d'un mouvement de translation relatif, entre la tringle de commande (40 ; 340) et la tringle de travail (70 ; 370), superposé à ce mouvement de translation au moyen du mécanisme de superposition, initialisé par son entraînement de positionnement (60 ; 160 ; 260 ; 360) entre la tringle de commande (30 ; 340) et la tringle de travail (70 ; 370), et dans lequel le mouvement de translation de la tringle de travail (70 ; 370) est transmis à la roue directrice sur une partie de la tringlerie de direction, afin de diriger cette roue, et le mécanisme de superposition comprend une broche (43 ; 356) et un écrou (52 ; 346) qui coopèrent à la manière d'un entraînement à broche-et-écrou,
**caractérisé en ce qu'**une première partie de mécanisme (43 ; 346), d'une paire de parties de mécanismes formées par la broche (43 ; 356) et par l'écrou (52 ; 346), est reliée fermement à une première tringle (40 ; 340) d'une paire de tringles formées par la tringle de commande (40 ; 340) et par la tringle de travail (70 ; 370), la seconde partie de mécanisme (52 ; 356) de la paire de parties de mécanismes est montée sur la seconde tringle (70 ; 370) en rotation par rapport à la seconde tringle (70 ; 370) de la paire de tringles, et l'entraînement de positionnement (60 ; 160 ; 260 ; 360) est réalisé et agencé pour entraîner la seconde partie de mécanisme (52 20,356) pour une rotation par rapport à la seconde tringle (70 ; 370).

2. Système de direction automobile selon la revendication 1, **caractérisé en ce que** la première partie de mécanisme de la paire de parties de mécanismes est l'écrou (346), et **en ce que** la première tringle de la paire de tringles est la tringle de commande (340).

3. Système de direction automobile selon la revendication 1 ou 2, **caractérisé en ce que** la tringle de commande (40 ; 340) comprend une première partie de tringle (41 ; 341) avec une denture,
telle que la première partie de tringle (41 ; 341) coopère avec le mécanisme de direction, et **en ce que** la tringle de commande (40 ; 340) comprend une seconde partie de tringle (43 ; 345 ; 346), qui forme la première partie de mécanisme.

4. Système de direction automobile selon l'une des revendications 1 à 3, **caractérisé en ce que** la tringle de travail (370) comporte une cavité dans laquelle est agencée la tringle de commande (340).

5. Système de direction automobile selon la revendication 3 et 4, **caractérisé en ce qu'**une enveloppe de la tringle de travail (370) comporte une ouverture traversante (374) à travers laquelle le mécanisme de direction peut coopérer avec la tringle de commande (340) reçue dans la tringle de travail (370).

6. Système de direction automobile selon la revendication 4 ou 5, **caractérisé en ce que** l'entraînement de positionnement (360) est agencé dans la cavité de la tringle de travail (370).

7. Système de direction automobile selon la revendication 6, **caractérisé en ce que** l'entraînement de positionnement comprend un moteur électrique à courant alternatif (360) présentant un grand nombre de pôles.

8. Système de direction automobile selon la revendication 6 ou 7, **caractérisé en ce que** des moyens de liaison de moteur (361) sont agencés dans la cavité de la tringle de travail (370), et l'entraînement de positionnement (360) est fixé dans ou sur les moyens de liaison de moteur (361), et dans lequel les moyens de liaison de moteur (361) sont réalisés de façon élastique.

9. Système de direction automobile selon l'une des revendications 1 à 5, **caractérisé en ce que** l'entraînement de positionnement comprend un moteur d'entraînement (60, 160, 260) à distance de la seconde partie de mécanisme (52), et est accouplé à la seconde partie de mécanisme (52) via un mécanisme d'entraînement rotatif, afin d'entraîner celui-ci en rotation par rapport à la seconde tringle.

10. Système de direction automobile selon l'une des revendications 1 à 3 ou 9, **caractérisé en ce que** la tringle de travail (70) est agencée de façon décalée par rapport à la tringle de commande (40) à une distance transversalement à la direction longitudinale de la tringle de commande.

11. Système de direction automobile selon l'une des revendications 1 à 10, **caractérisé en ce que** le mécanisme de superposition et la tringlerie de direction sont réalisés et agencés de telle manière que les angles de direction imposés par une position de rotation de la broche de direction (20) par actionnement de l'entraînement de positionnement (60 ; 160 ; 260 ; 360) pour deux roues directrices sont influencés de la même manière que lors d'une modification de la position de rotation.

12. Système de direction automobile selon la revendication 11, **caractérisé en ce que** le mécanisme de superposition comprend un seul organe mené (70 ; 370) qui est relié à la fois à la première et à la seconde parmi deux roues directrices, exclusivement via des articulations de pivotement et des organes de liaison rigides.

13. Système de direction automobile selon la revendication 12, **caractérisé en ce que** l'organe mené comprend la tringle de travail (70 ; 370), celle-ci étant réalisée en continu depuis un premier levier de direction de la première roue directrice jusqu'à un second levier de direction de la seconde roue directrice.

14. Système de direction automobile selon l'une des revendications 1 à 13, pour un véhicule pourvu d'au moins une roue directrice, comprenant une manette de direction (10), qui est couplée à la roue directrice afin de diriger celle-ci, dans lequel il existe un rapport de démultiplication entre un angle de rotation de la manette de direction et un angle de pivotement de la roue directrice,
**caractérisé par** un dispositif de commande au moyen duquel le rapport de démultiplication peut être modifié, en correspondance d'un champ caractéristique et au moins en fonction de la déviation de la manette de direction depuis une position en ligne droite, et en fonction de la vitesse de déplacement, de telle façon que le rapport de démultiplication est essentiellement constant quand la vitesse de déplacement tombe entre une vitesse limite inférieure et une vitesse limite supérieure et aussi que la déviation de la manette de direction (10) hors de la position en ligne droite est inférieure à un angle de déviation limite.

15. Système de direction automobile selon la revendication 14, **caractérisé en ce qu'**il comprend un mécanisme de superposition pourvu d'un moteur d'entraînement (60 ; 160 ; 260 ; 360), ledit mécanisme agissant entre un composant de commande (40 ; 340) et un composant de travail (70 ; 370) de la direction, ledit composant de commande (40 ; 340) étant déplaçable sous l'influence de la manette de direction, et le composant de travail (70 ; 370) est déplaçable sous l'influence du mouvement du composant de commande (40 ; 340) et d'un mouvement relatif, superposé à ce mouvement au moyen du mécanisme de superposition et amorcé par son moteur d'entraînement (60 ; 160 ; 260 ; 360), entre le composant de commande (40 ; 340) et le composant de travail (70 ; 370), et dans lequel le mouvement du composant de travail (70 ; 370) est transmis à la roue directrice pour diriger celle-ci, et dans lequel, dans le cas où la vitesse de circulation est située entre la vitesse limite inférieure et la vitesse limite supérieure et simultanément la déviation de la manette de direction (10) hors de la position en ligne droite est inférieure à l'angle de déviation limite, le moteur d'entraînement est bloqué.

16. Système de direction automobile selon la revendication 14 ou 15, **caractérisé en ce que,** pour des vitesses de circulation qui sont inférieures à la vitesse limite inférieure, la variabilité du rapport de démultiplication en fonction de la déviation est supérieure à celle pour des vitesses de circulation qui sont supérieures à la vitesse limite inférieure.

17. Système de direction automobile selon l'une des revendications 14 à 16, **caractérisé en ce que,** pour des vitesses de circulation qui sont supérieures à la vitesse limite supérieure, la variabilité du rapport de démultiplication en fonction de la vitesse est supérieure à celle pour des vitesses de circulation qui sont inférieures à la vitesse limite supérieure.
